# EUROPÄISCHE PATENTSCHRIFT

(11) **EP 3 120 284 B1**
(45) Veröffentlichungstag und Bekanntmachung des Hinweises auf die Patenterteilung: **03.10.2018**
(21) Anmeldenummer: 15709210.7
(22) Anmeldetag: 12.03.2015
(51) Int. Cl.: G06F 21/32, H04L 29/06

(54) **VERFAHREN ZUM IDENTIFIZIEREN EINES NUTZERS EINES KOMMUNIKATIONSGERÄTES UNTER VERWENDUNG EINES ELEKTRONISCHEN IDENTIFIKATIONSDIENSTES**
METHOD FOR IDENTIFYING A USER OF A COMMUNICATION DEVICE USING AN ELECTRONIC IDENTIFICATION SERVICE
PROCÉDÉ D'IDENTIFICATION D'UN UTILISATEUR D'UN APPAREIL DE COMMUNICATION À L'AIDE D'UN SERVICE D'IDENTIFICATION ÉLECTRONIQUE

(30) Priorität: 20.03.2014 DE 102014103821
(43) Veröffentlichungstag der Anmeldung: 25.01.2017
(73) Patentinhaber: Bundesdruckerei GmbH, 10969 Berlin (DE)
(72) Erfinder: FISCHBECK, Matthias, 30826 Garbsen (DE)
(74) Vertreter: Patentship Patentanwaltsgesellschaft mbH
(86) Internationale Anmeldenummer: PCT/EP2015/055204
(87) Internationale Veröffentlichungsnummer: WO 2015/140046

(56) Entgegenhaltungen:
- EP-A1- 2 704 077
- EP-A2- 1 693 801
- US-A- 5 930 804
- US-A1- 2004 232 220
- US-A1- 2007 079 136
- Elvin Cheng: "An Introduction to Mutual SSL Authentication - CodeProject", , 8 February 2012 (2012-02-08), XP055383962, Retrieved from the Internet: URL:https://www.codeproject.com/Articles/3 26574/An-Introduction-to-Mutual-SSL-Authen tication [retrieved on 2017-06-22]

## Beschreibung

Die vorliegende Erfindung betrifft das Gebiet der Identifikation eines Nutzers eines Kommun ikationsgerätes.

Die Patentschrift US 5,930,804 beschreibt ein webbasiertes biometrisches Authentifizieru ngssystem.

Eine Identifikation von Personen ist für eine Vielzahl von personenbezogenen Dienstleitungen, beispielsweise die Eröffnung eines Bankkontos, von Bedeutung. Zur Feststellung der Identität einer Person kann beispielsweise das Gesicht der Person mit einem aufgedruckten Gesichtsbild der Person auf einem Identifikationsdokument verglichen werden. Der Vergleich wird dabei üblicherweise durch einen Dienstleistungsanbieter vor Ort durchgeführt. Bei einer Übereinstimmung zwischen dem Gesicht der Person und dem aufgedruckten Gesichtsbild auf dem Identifikationsdokument können die aufgedruckten Personendaten auf dem Identifikationsdokument als gültig betrachtet und zur Identifikation herangezogen werden.

Personenbezogene Dienstleistungen können darüber hinaus elektronisch beantragt oder durchgeführt werden. Zu diesem Zweck kann die Person ein Kommunikationsgerät nutzen. Eine Identifikation der Person als Nutzer des Kommunikationsgerätes wird dabei durch einen Dienstleistungsanbieter üblicherweise nicht unmittelbar durchgeführt. Eine Identifikation der Person als Nutzer des Kommunikationsgerätes erfolgt typischerweise nachgelagert vor Ort in einer Filiale des Dienstleistungsanbieters. Dies ist mit hohem Aufwand sowie mit hohen Kosten für den Dienstleistungsanbieter verbunden. Zudem wird eine nachgelagerte Identifikation vor Ort als unkomfortabel und zeitaufwändig empfunden.

Es ist daher die Aufgabe der vorliegenden Erfindung, ein effizientes und kostengünstiges Konzept zum Identifizieren eines Nutzers eines Kommunikationsgerätes zu schaffen.

Diese Aufgabe wird durch die Merkmale der unabhängigen Ansprüche gelöst. Vorteilhafte Weiterbildungsformen sind Gegenstand der abhängigen Patentansprüche, der Beschreibung sowie der Figuren.

Die Erfindung basiert auf der Erkenntnis, dass die obige Aufgabe unter Verwendung eines elektronischen Identifikationsdienstes gelöst werden kann. Das Kommunikationsgerät kann eine biometrisches Merkmal des Nutzers, beispielsweise ein Gesichtsbild des Nutzers, erfassen und an den elektronischen Identifikationsdienst übertragen. Der elektronische Identifikationsdienst kann das erfasste biometrische Merkmal des Nutzers mit einem biometrischen Referenzmerkmal vergleiche, um den Nutzer zu identifizieren. Dem biometrischen Referenzmerkmal können Personendaten zugeordnet sein.

Die Übertragung des erfassten biometrischen Merkmals des Nutzers zu dem elektronischen Identifikationsdienst wird dabei über einen Zentralserver durchgeführt, wobei sich sowohl das Kommunikationsgerät als auch der elektronische Identifikationsdienst gegenüber dem Zentralserver authentifizieren. Dadurch wird erreicht, dass das erfasste biometrische Merkmal des Nutzers über authentifizierte Kommunikationsverbindungen übertragen wird.

Ferner kann das biometrische Referenzmerkmal elektronisch aus einem elektronisch auslesbaren Identifikationsdokument des Nutzers ausgelesen werden und über dieselben authentifizierten Kommunikationsverbindungen übertragen werden. Das elektronisch auslesbare Identifikationsdokument kann beispielsweise ein elektronischer Reisepass oder ein neuer Personalausweis sein.

Gemäß einem ersten Aspekt betrifft die Erfindung ein Verfahren zum Identifizieren eines Nutzers eines Kommunikationsgerätes unter Verwendung eines elektronischen Identifikationsdienstes, mit einem Authentifizieren des Kommunikationsgerätes gegenüber einem Zentralserver, um eine erste Kommunikationsverbindung zwischen dem Kommunikationsgerät und dem Zentralserver aufzubauen, einem Authentifizieren des elektronischen Identifikationsdienstes gegenüber dem Zentralserver, um eine zweite Kommunikationsverbindung zwischen dem elektronischen Identifikationsdienst und dem Zentralserver aufzubauen, einem Erfassen eines biometrischen Merkmals des Nutzers durch das Kommunikationsgerät, einem Übertragen des erfassten biometrischen Merkmals des Nutzers durch das Kommunikationsgerät an den Zentralserver über die erste Kommunikationsverbindung, einem Übertragen des erfassten biometrischen Merkmals des Nutzers durch den Zentralserver an den elektronischen Identifikationsdienst über die zweite Kommunikationsverbindung, und einem Vergleichen des erfassten biometrischen Merkmals des Nutzers mit einem biometrischen Referenzmerkmal durch den elektronischen Identifikationsdienst, um den Nutzer zu identifizieren. Dadurch wird der Vorteil erreicht, dass ein effizientes und kostengünstiges Konzept zum Identifizieren des Nutzers des Kommunikationsgerätes realisiert werden kann.

Das Kommunikationsgerät kann ein mobiles Kommunikationsgerät, beispielsweise ein Mobiltelefon oder Smartphone, sein. Das Kommunikationsgerät kann ferner ein stationäres Kommunikationsgerät, beispielsweise ein Computer oder ein Terminal, sein.

Der elektronische Identifikationsdienst kann das Vergleichen des erfassten biometrischen Merkmals des Nutzers mit dem biometrischen Referenzmerkmal automatisiert durchführen. Der elektronische Identifikationsdienst kann das Vergleichen des erfassten biometrischen Merkmals des Nutzers mit dem biometrischen Referenzmerkmal ferner unter Verwendung einer elektronischen Mustererkennung und/oder eines elektronischen Mustervergleichs durchführen. Gemäß einer Ausführungsform wird der Vergleich des erfassten biometrischen Merkmals des Nutzers mit dem biometrischen Referenzmerkmal visuell durch eine Person durchgeführt. Gemäß einer anderen Ausführungsform wird der Vergleich des erfassten biometrischen Merkmals des Nutzers mit dem biometrischen Referenzmerkmal automatisch, beispielsweise auf der Basis eines Mustervergleichs mittels eines Prozessors oder einer Datenverarbeitungsanlage, durchgeführt.

Der Zentralserver kann das erfasste biometrische Merkmal des Nutzers von dem Kommunikationsgerät an den elektronischen Identifikationsdienst weiterleiten. Der Zentralserver kann ein Instant-Messaging-Zentralserver sein, welcher beispielsweise gemäß einem erweiterbaren Nachrichten- und Anwesenheitsprotokoll (Extensible Messaging and Presence Protocol, XMPP) implementiert sein kann.

Die erste Kommunikationsverbindung und die zweite Kommunikationsverbindung können authentifizierte Kommunikationsverbindungen sein. Die erste Kommunikationsverbindung und die zweite Kommunikationsverbindung können ferner verschlüsselte Kommunikationsverbindungen sein. Die erste Kommunikationsverbindung und die zweite Kommunikationsverbindung können gemäß einem erweiterbaren Nachrichten- und Anwesenheitsprotokoll (Extensible Messaging and Presence Protocol, XMPP) aufgebaut werden.

Das biometrische Merkmal des Nutzers und das biometrische Referenzmerkmal können ein Gesichtsbild des Nutzers, ein Stimmmuster des Nutzers, ein Fingerabdruck des Nutzers, oder ein Irisabbild eines Auges des Nutzers sein.

Gemäß einer Ausführungsform ist dem Kommunikationsgerät oder dem Nutzer des Kommunikationsgerätes eine Zugangskennung und/oder ein Zugangspasswort zugeordnet, wobei das Authentifizieren des Kommunikationsgerätes gegenüber dem Zentralserver auf Basis der Zugangskennung und/oder des Zugangspassworts durchgeführt wird. Dadurch wird der Vorteil erreicht, dass das Authentifizieren des Kommunikationsgerätes gegenüber dem Zentralserver effizient durchgeführt werden kann.

Die Zugangskennung und das Zugangspasswort können durch alphanummerische Zeichenketten gebildet sein. Das Authentifizieren des Kommunikationsgerätes gegenüber dem Zentralserver kann mittels einer Aufforderung-Antwort-Authentifizierung (Challenge-Response-Authentication) auf Basis der Zugangskennung und/oder des Zugangspassworts durchgeführt werden.

Gemäß einer Ausführungsform ist dem elektronischen Identifikationsdienst eine weitere Zugangskennung und/oder ein weiteres Zugangspasswort zugeordnet, wobei das Authentifizieren des elektronischen Identifikationsdienstes gegenüber dem Zentralserver auf Basis der weiteren Zugangskennung und/oder des weiteren Zugangspassworts durchgeführt wird. Dadurch wird der Vorteil erreicht, dass das Authentifizieren des elektronischen Identifikationsdienstes gegenüber dem Zentralserver effizient durchgeführt werden kann.

Die weitere Zugangskennung und das weitere Zugangspasswort können durch alphanummerische Zeichenketten gebildet sein. Das Authentifizieren des elektronischen Identifikationsdienstes gegenüber dem Zentralserver kann mittels einer Aufforderung-Antwort-Authentifizierung (Challenge-Response-Authentication) auf Basis der weiteren Zugangskennung und/oder des weiteren Zugangspassworts durchgeführt werden.

Gemäß einer Ausführungsform wird die erste Kommunikationsverbindung und/oder die zweite Kommunikationsverbindung mittels eines verschlüsselten Transportschichtsicherheitsprotokolls aufgebaut. Dadurch wird der Vorteil erreicht, dass die erste Kommunikationsverbindung und/oder die zweite Kommunikationsverbindung verschlüsselt aufgebaut werden können.

Das verschlüsselte Transportschichtsicherheitsprotokoll kann beispielsweise ein Transport Layer Security (TLS) Protokoll oder ein Secure Sockets Layer (SSL) Protokoll sein.

Gemäß einer Ausführungsform umfasst das Erfassen des biometrischen Merkmals des Nutzers durch das Kommunikationsgerät ein Erfassen eines alphanummerischen Personendatums des Nutzers durch das Kommunikationsgerät, wobei das Übertragen des erfassten biometrischen Merkmals des Nutzers durch das Kommunikationsgerät an den Zentralserver über die erste Kommunikationsverbindung ein Übertragen des erfassten alphanummerischen Personendatums des Nutzers durch das Kommunikationsgerät an den Zentralserver über die erste Kommunikationsverbindung umfasst, und wobei das Übertragen des erfassten biometrischen Merkmals des Nutzers durch den Zentralserver an den elektronischen Identifikationsdienst über die zweite Kommunikationsverbindung ein Übertragen des erfassten alphanummerischen Personendatums des Nutzers durch den Zentralserver an den elektronischen Identifikationsdienst über die zweite Kommunikationsverbindung umfasst. Dadurch wird der Vorteil erreicht, dass das erfasste alphanummerische Personendatum über authentifizierte Kommunikationsverbindungen übertragen werden kann und durch den elektronischen Identifikationsdienst weiterverarbeitet werden kann.

Das alphanummerische Personendatum kann beispielsweise eine Adresse einer Person sein. Das alphanummerische Personendatum kann durch den Nutzer des Kommunikationsgerätes frei gewählt werden. Das Erfassen des alphanummerischen Personendatums kann mittels einer Tastatur des Kommunikationsgerätes durchgeführt werden. Das Erfassen des alphanummerischen Personendatums kann ferner ein Erfassen des alphanummerischen Personendatums aus einem Speicher des Kommunikationsgerätes umfassen.

Gemäß einer Ausführungsform umfasst das Verfahren ein Auslesen des biometrischen Referenzmerkmals aus einem elektronisch auslesbaren Identifikationsdokument des Nutzers, und ein Übertragen des ausgelesenen biometrischen Referenzmerkmals an den elektronischen Identifikationsdienst über die erste Kommunikationsverbindung und die zweite Kommunikationsverbindung. Dadurch wird der Vorteil erreicht, dass das biometrische Referenzmerkmal effizient bereitgestellt werden kann.

Das elektronisch auslesbare Identifikationsdokument kann eines der folgenden Identifikationsdokumente sein: Identitätsdokument, wie Personalausweis, Reisepass, Zugangskontrollausweis, Berechtigungsausweis, Unternehmensausweis, Steuerzeichen oder Ticket, Geburtsurkunde, Führerschein oder Kraftfahrzeugausweis, Zahlungsmittel, beispielsweise eine Bankkarte oder Kreditkarte. Das elektronisch auslesbare Identifikationsdokument kann ferner einen elektronisch auslesbaren integrierten Schaltkreis, beispielsweise einen NFC-Chip oder einen RFID-Chip, umfassen. Das elektronisch auslesbare Identifikationsdokument kann ein- oder mehrlagig bzw. papier-und/oder kunststoffbasiert sein. Das elektronisch auslesbare Identifikationsdokument kann aus kunststoffbasierten Folien aufgebaut sein, welche zu einem Kartenkörper mittels Verkleben und/oder Laminieren zusammengefügt werden, wobei die Folien bevorzugt ähnliche stoffliche Eigenschaften aufweisen.

Gemäß einer Ausführungsform umfasst das Auslesen des biometrischen Referenzmerkmals aus dem elektronisch auslesbaren Identifikationsdokument des Nutzers ein Auslesen eines weiteren alphanummerischen Personendatums aus dem elektronisch auslesbaren Identifikationsdokument des Nutzers, wobei das Übertragen des ausgelesenen biometrischen Referenzmerkmals an den elektronischen Identifikationsdienst über die erste Kommunikationsverbindung und die zweite Kommunikationsverbindung ein Übertragen des ausgelesenen weiteren alphanummerischen Personendatums an den elektronischen Identifikationsdienst über die erste Kommunikationsverbindung und die zweite Kommunikationsverbindung umfasst. Dadurch wird der Vorteil erreicht, dass ein weiteres alphanummerisches Personendatum über authentifizierte Kommunikationsverbindungen übertragen werden kann und durch den elektronischen Identifikationsdienst weiterverarbeitet werden kann.

Das weitere alphanummerische Personendatum kann beispielsweise ein Name einer Person, ein Geburtsdatum einer Person, oder eine Nationalität einer Person sein. Das weitere alphanummerische Personendatum kann in dem elektronisch auslesbaren Identifikationsdokument vorgespeichert sein. Gemäß einer Ausführungsform kann das weitere alphanummerische Personendatum durch den Nutzer des Kommunikationsgerätes nicht verändert werden. Gemäß einer weiteren Ausführungsform kann das weitere alphanummerische Personendatum durch den Nutzer des Kommunikationsgerätes geprüft und/oder korrigiert werden.

Gemäß einer Ausführungsform umfasst das Auslesen des biometrischen Referenzmerkmals aus dem elektronisch auslesbaren Identifikationsdokument des Nutzers ein optisches Erfassen einer optisch erfassbaren Identifikationskennung des Identifikationsdokumentes durch das Kommunikationsgerät, wobei das Auslesen des biometrischen Referenzmerkmals aus dem elektronisch auslesbaren Identifikationsdokument des Nutzers durch das Kommunikationsgerät auf Basis der optisch erfassten Identifikationskennung des Identifikationsdokumentes durchgeführt wird. Dadurch wird der Vorteil erreicht, dass das Auslesen des biometrischen Referenzmerkmals effizient durchgeführt werden kann.

Das optische Erfassen der optisch erfassbaren Identifikationskennung des Identifikationsdokumentes kann mittels einer Kamera des Kommunikationsgerätes durchgeführt werden. Das optische Erfassen der optisch erfassbaren Identifikationskennung des Identifikationsdokumentes kann ferner ein Durchführen einer optischen Zeichenerkennung (Optical Character Recognition, OCR) umfassen. Die optisch erfassbare Identifikationskennung des Identifikationsdokumentes kann beispielsweise eine maschinen-lesbare Zone (Machine Readable Zone, MRZ) des Identifikationsdokumentes sein.

Das Auslesen des biometrischen Referenzmerkmals aus dem elektronisch auslesbaren Identifikationsdokument auf Basis der optisch erfassten Identifikationskennung kann mittels eines Zugriffskontrollverfahrens, beispielsweise eines Basic Access Control (BAC) Verfahrens oder eines Supplemental Access Control (SAC) Verfahrens, durchgeführt werden.

Gemäß einer Ausführungsform ist das Kommunikationsgerät mit einem elektronischen Identifizierungsserver verbunden, wobei das Verfahren ferner ein Aussenden einer Ausleseanfrage durch das Kommunikationsgerät an den elektronischen Identifizierungsserver und ein Aufbauen einer dritten Kommunikationsverbindung zwischen dem elektronischen Identifizierungsserver und dem elektronisch auslesbaren Identifikationsdokument über das Kommunikationsgerät umfasst, wobei das Auslesen des biometrischen Referenzmerkmals aus dem elektronisch auslesbaren Identifikationsdokument des Nutzers durch den elektronischen Identifizierungsserver durchgeführt wird, und wobei das Verfahren ferner ein Übertragen des ausgelesenen biometrischen Referenzmerkmals durch den elektronischen Identifizierungsserver an das Kommunikationsgerät umfasst. Dadurch wird der Vorteil erreicht, dass das Auslesen des biometrischen Referenzmerkmals effizient durchgeführt werden kann.

Der elektronische Identifizierungsserver kann ein eID-Server sein. Der elektronische Identifizierungsserver kann gemäß der technischen Richtlinie BSI TR-03130 implementiert werden. Die Ausleseanfrage kann eine Kommunikationsadresse des Kommunikationsgerätes umfassen. Die dritte Kommunikationsverbindung kann authentifiziert und/oder verschlüsselt sein.

Gemäß einer Ausführungsform ist das biometrische Merkmal des Nutzers ein Gesichtsbild des Nutzers, ein Stimmmuster des Nutzers, ein Fingerabdruck des Nutzers, oder ein Irisabbild eines Auges des Nutzers. Dadurch wird der Vorteil erreicht, dass ein biometrisches Merkmal verwendet werden kann, welches eindeutig einer Person zugeordnet sein kann.

Das Gesichtsbild des Nutzers kann mittels einer Kamera des Kommunikationsgerätes erfasst werden. Das Stimmmuster des Nutzers kann mittels eines Mikrophons des Kommunikationsgerätes erfasst werden. Der Fingerabdruck des Nutzers kann mittels eines Fingerabdrucksensors des Kommunikationsgerätes erfasst werden. Das Irisabbild des Auges des Nutzers kann mittels einer Kamera des Kommunikationsgerätes oder eines Irisscanners des Kommunikationsgerätes erfasst werden.

Gemäß einem zweiten Aspekt betrifft die Erfindung ein Kommunikationsgerät zum Identifizieren eines Nutzers des Kommunikationsgerätes unter Verwendung eines elektronischen Identifikationsdienstes, mit einer Erfassungseinrichtung, welche ausgebildet ist, ein biometrisches Merkmal des Nutzers zu erfassen, und einer Kommunikationsschnittstelle, welche ausgebildet ist, das Kommunikationsgerät gegenüber einem Zentralserver zu authentifizieren, um eine erste Kommunikationsverbindung zwischen dem Kommunikationsgerät und dem Zentralserver aufzubauen, und das erfasste biometrische Merkmal des Nutzers an den Zentralserver über die erste Kommunikationsverbindung zu übertragen. Dadurch wird der Vorteil erreicht, dass ein effizientes und kostengünstiges Konzept zum Identifizieren des Nutzers des Kommunikationsgerätes realisiert werden kann.

Das Kommunikationsgerät kann ein mobiles Kommunikationsgerät, beispielsweise ein Mobiltelefon oder Smartphone, sein. Das Kommunikationsgerät kann ferner ein stationäres Kommunikationsgerät, beispielsweise ein Computer oder ein Terminal, sein.

Die Erfassungseinrichtung kann eine Kamera zum Erfassen eines Gesichtsbildes des Nutzers oder zum Erfassen eines Irisabbildes eines Auges des Nutzers sein. Die Erfassungseinrichtung kann ferner ein Mikrophon zum Erfassen eines Stimmmusters des Nutzers sein. Die Erfassungseinrichtung kann ferner ein Fingerabdrucksensor zum Erfassen eines Fingerabdrucks des Nutzers sein. Die Erfassungseinrichtung kann ferner ein Irisscanner zum Erfassen eines Irisabbildes eines Auges des Nutzers sein.

Die Kommunikationsschnittstelle kann eine drahtlose Kommunikationsschnittstelle, beispielsweise eine Mobilfunkkommunikationsschnittstelle, oder eine drahtgebundene Kommunikationsschnittstelle sein.

Das Verfahren zum Identifizieren eines Nutzers eines Kommunikationsgerätes kann mittels des Kommunikationsgerätes durchgeführt werden. Weitere Merkmale des Kommunikationsgerätes ergeben sich unmittelbar aus der Funktionalität des Verfahrens.

Gemäß einer Ausführungsform umfasst das Kommunikationsgerät eine weitere Kommunikationsschnittstelle, insbesondere einer Nahfeldkommunikationsschnittstelle, welche ausgebildet ist, mit einem elektronisch auslesbaren Identifikationsdokument des Nutzers zu kommunizieren, um ein biometrisches Referenzmerkmal aus dem elektronisch auslesbaren Identifikationsdokument des Nutzers auszulesen. Dadurch wird der Vorteil erreicht, dass das biometrische Referenzmerkmal aus dem elektronisch auslesbaren Identifikationsdokument effizient ausgelesen werden kann.

Die weitere Kommunikationsschnittstelle kann eine Nahfeldkommunikationsschnittstelle sein. Die weitere Kommunikationsschnittstelle kann gemäß einem Near Field Communication (NFC) Standard oder Radio Frequency Identification (RFID) Standard oder nach dem Standard ISO 1443a/b oder dem Standard ISO 7816-x implementiert sein. Die weitere Kommunikationsschnittstelle kann ausgebildet sein, eine Authentizität oder Echtheit eines elektronischen Schaltkreises des Identifikationsdokumentes zu verifizieren.

Gemäß einem dritten Aspekt betrifft die Erfindung einen elektronischen Identifikationsdienst zum Identifizieren eines Nutzers eines Kommunikationsgerätes, mit einer Kommunikationsschnittstelle, welche ausgebildet ist, den elektronischen Identifikationsdienst gegenüber einem Zentralserver zu authentifizieren, um eine zweite Kommunikationsverbindung zwischen dem elektronischen Identifikationsdienst und dem Zentralserver aufzubauen, und ein erfasstes biometrisches Merkmal des Nutzers von dem Zentralserver über die zweite Kommunikationsverbindung zu empfangen, und einem Prozessor, welcher ausgebildet ist, das erfasste biometrische Merkmal des Nutzers mit einem biometrischen Referenzmerkmal zu vergleichen, um den Nutzer zu identifizieren. Dadurch wird der Vorteil erreicht, dass ein effizientes und kostengünstiges Konzept zum Identifizieren des Nutzers des Kommunikationsgerätes realisiert werden kann.

Der elektronische Identifikationsdienst kann das Vergleichen des erfassten biometrischen Merkmals des Nutzers mit dem biometrischen Referenzmerkmal automatisiert durchführen. Der elektronische Identifikationsdienst kann das Vergleichen des erfassten biometrischen Merkmals des Nutzers mit dem biometrischen Referenzmerkmal ferner unter Verwendung einer elektronischen Mustererkennung und/oder eines elektronischen Mustervergleichs durchführen. Gemäß einer Ausführungsform wird der Vergleich des erfassten biometrischen Merkmals des Nutzers mit dem biometrischen Referenzmerkmal visuell durch eine Person durchgeführt.

Die Kommunikationsschnittstelle kann eine drahtlose Kommunikationsschnittstelle, beispielsweise eine Mobilfunkkommunikationsschnittstelle, oder eine drahtgebundene Kommunikationsschnittstelle sein.

Der Prozessor kann ausgebildet sein, ein Computerprogramm auszuführen.

Das Verfahren zum Identifizieren eines Nutzers eines Kommunikationsgerätes kann mittels des elektronischen Identifikationsdienstes durchgeführt werden. Weitere Merkmale des elektronischen Identifikationsdienstes ergeben sich unmittelbar aus der Funktionalität des Verfahrens.

Gemäß einem vierten Aspekt betrifft die Erfindung ein System zum Identifizieren eines Nutzers eines Kommunikationsgerätes unter Verwendung eines elektronischen Identifikationsdienstes, mit dem Kommunikationsgerät nach dem zweiten Aspekt, dem elektronischen Identifikationsdienst nach dem dritten Aspekt, und einem Zentralserver, welcher ausgebildet ist, das erfasste biometrische Merkmal des Nutzers an den elektronischen Identifikationsdienst über die zweite Kommunikationsverbindung zu übertragen. Dadurch wird der Vorteil erreicht, dass ein effizientes und kostengünstiges Konzept zum Identifizieren des Nutzers des Kommunikationsgerätes realisiert werden kann.

Der Zentralserver kann das erfasste biometrische Merkmal des Nutzers von dem Kommunikationsgerät an den elektronischen Identifikationsdienst weiterleiten. Der Zentralserver kann ein Instant-Messaging-Zentralserver sein, welcher beispielsweise gemäß einem erweiterbaren Nachrichten- und Anwesenheitsprotokoll (Extensible Messaging and Presence Protocol, XMPP) implementiert sein kann.

Das Verfahren zum Identifizieren eines Nutzers eines Kommunikationsgerätes kann mittels des Systems durchgeführt werden. Weitere Merkmale des Systems ergeben sich unmittelbar aus der Funktionalität des Verfahrens.

Gemäß einem fünften Aspekt betrifft die Erfindung ein Computerprogramm mit einem Programmcode zum Ausführen des Verfahrens, wenn der Programmcode auf einem Computer ausgeführt wird. Dadurch wird der Vorteil erreicht, dass das Verfahren automatisiert und wiederholbar ausgeführt werden kann.

Das Computerprogramm kann eine Folge von Befehlen für einen Prozessor des Computers umfassen. Das Computerprogramm kann in Form eines maschinen-lesbaren Programmcodes vorliegen.

Die Erfindung kann in Hardware und/oder Software realisiert werden.

Weitere Ausführungsbeispiele werden Bezug nehmend auf die beiliegenden Figuren näher erläutert. Es zeigen:
- Fig. 1: ein Diagramm eines Verfahrens zum Identifizieren eines Nutzers eines Kommunikationsgerätes unter Verwendung eines elektronischen Identifikationsdienstes gemäß einer Ausführungsform;
- Fig. 2: ein Diagramm eines Kommunikationsgerätes zum Identifizieren eines Nutzers des Kommunikationsgerätes unter Verwendung eines elektronischen Identifikationsdienstes gemäß einer Ausführungsform;
- Fig. 3: ein Diagramm eines elektronischen Identifikationsdienstes zum Identifizieren eines Nutzers eines Kommunikationsgerätes gemäß einer Ausführungsform;
- Fig. 4: ein Diagramm eines Systems zum Identifizieren eines Nutzers eines Kommunikationsgerätes unter Verwendung eines elektronischen Identifikationsdienstes gemäß einer Ausführungsform;
- Fig. 5: ein Diagramm eines Systems zum Identifizieren eines Nutzers eines Kommunikationsgerätes unter Verwendung eines elektronischen Identifikationsdienstes gemäß einer Ausführungsform;
- Fig. 6: ein Diagramm eines Verfahrens zum Identifizieren eines Nutzers eines Kommunikationsgerätes unter Verwendung eines elektronischen Identifikationsdienstes gemäß einer Ausführungsform; und
- Fig. 7: ein Diagramm eines Systems zum Identifizieren eines Nutzers eines Kommunikationsgerätes unter Verwendung eines elektronischen Identifikationsdienstes gemäß einer Ausführungsform.

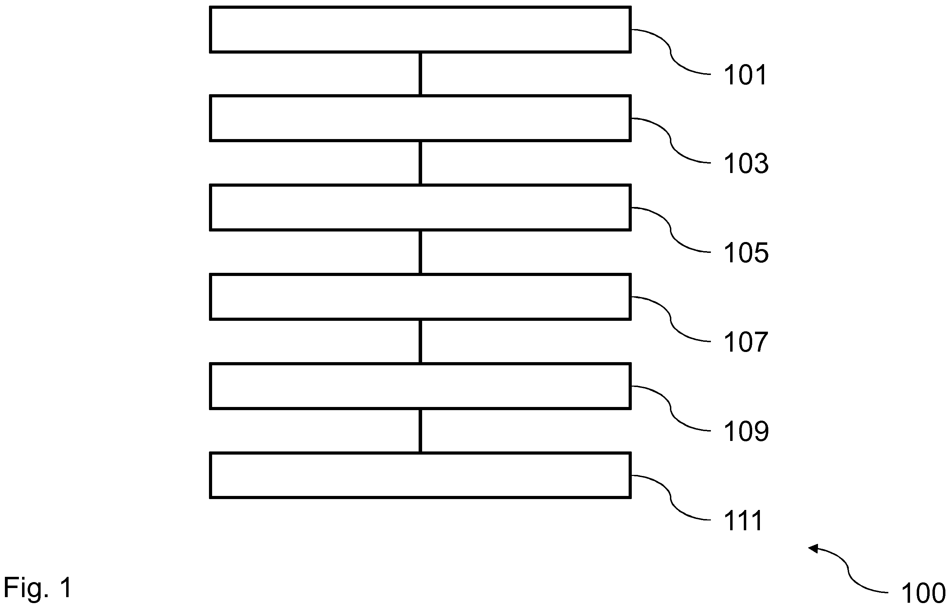

Fig. 1 zeigt ein Diagramm eines Verfahrens 100 zum Identifizieren eines Nutzers eines Kommunikationsgerätes unter Verwendung eines elektronischen Identifikationsdienstes gemäß einer Ausführungsform.

Das Verfahren 100 umfasst ein Authentifizieren 101 des Kommunikationsgerätes gegenüber einem Zentralserver, um eine erste Kommunikationsverbindung zwischen dem Kommunikationsgerät und dem Zentralserver aufzubauen, ein Authentifizieren 103 des elektronischen Identifikationsdienstes gegenüber dem Zentralserver, um eine zweite Kommunikationsverbindung zwischen dem elektronischen Identifikationsdienst und dem Zentralserver aufzubauen, ein Erfassen 105 eines biometrischen Merkmals des Nutzers durch das Kommunikationsgerät, ein Übertragen 107 des erfassten biometrischen Merkmals des Nutzers durch das Kommunikationsgerät an den Zentralserver über die erste Kommunikationsverbindung, ein Übertragen 109 des erfassten biometrischen Merkmals des Nutzers durch den Zentralserver an den elektronischen Identifikationsdienst über die zweite Kommunikationsverbindung, und ein Vergleichen 111 des erfassten biometrischen Merkmals des Nutzers mit einem biometrischen Referenzmerkmal durch den elektronischen Identifikationsdienst, um den Nutzer zu identifizieren.

Das Kommunikationsgerät kann ein mobiles Kommunikationsgerät, beispielsweise ein Mobiltelefon oder Smartphone, sein. Das Kommunikationsgerät kann ferner ein stationäres Kommunikationsgerät, beispielsweise ein Computer oder ein Terminal, sein. Der elektronische Identifikationsdienst kann das Vergleichen 111 des erfassten biometrischen Merkmals des Nutzers mit dem biometrischen Referenzmerkmal automatisiert durchführen. Der elektronische Identifikationsdienst kann das Vergleichen 111 des erfassten biometrischen Merkmals des Nutzers mit dem biometrischen Referenzmerkmal ferner unter Verwendung einer elektronischen Mustererkennung und/oder eines elektronischen Mustervergleichs durchführen. Gemäß einer Ausführungsform wird der Vergleich des erfassten biometrischen Merkmals des Nutzers mit dem biometrischen Referenzmerkmal visuell durch eine Person durchgeführt.

Der Zentralserver kann das erfasste biometrische Merkmal des Nutzers von dem Kommunikationsgerät an den elektronischen Identifikationsdienst weiterleiten. Der Zentralserver kann ein Instant-Messaging-Zentralserver sein, welcher beispielsweise gemäß einem erweiterbaren Nachrichten- und Anwesenheitsprotokoll (Extensible Messaging and Presence Protocol, XMPP) implementiert sein kann.

Die erste Kommunikationsverbindung und die zweite Kommunikationsverbindung können authentifizierte Kommunikationsverbindungen sein. Die erste Kommunikationsverbindung und die zweite Kommunikationsverbindung können ferner verschlüsselte Kommunikationsverbindungen sein. Die erste Kommunikationsverbindung und die zweite Kommunikationsverbindung können gemäß einem erweiterbaren Nachrichten- und Anwesenheitsprotokoll (Extensible Messaging and Presence Protocol, XMPP) aufgebaut werden.

Das biometrische Merkmal des Nutzers und das biometrische Referenzmerkmal können ein Gesichtsbild des Nutzers, ein Stimmmuster des Nutzers, ein Fingerabdruck des Nutzers, oder ein Irisabbild eines Auges des Nutzers sein.

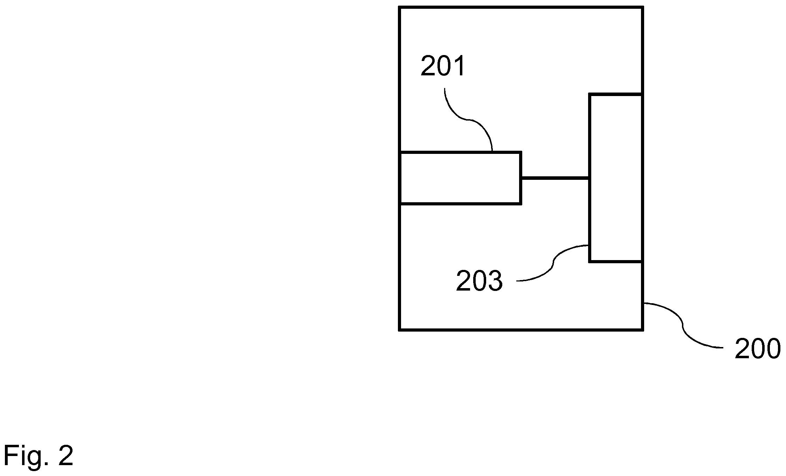

Fig. 2 zeigt ein Diagramm eines Kommunikationsgerätes 200 zum Identifizieren eines Nutzers des Kommunikationsgerätes 200 unter Verwendung eines elektronischen Identifikationsdienstes gemäß einer Ausführungsform.

Das Kommunikationsgerät 200 umfasst eine Erfassungseinrichtung 201, welche ausgebildet ist, ein biometrisches Merkmal des Nutzers zu erfassen, und eine Kommunikationsschnittstelle 203, welche ausgebildet ist, das Kommunikationsgerät gegenüber einem Zentralserver zu authentifizieren, um eine erste Kommunikationsverbindung zwischen dem Kommunikationsgerät und dem Zentralserver aufzubauen, und das erfasste biometrische Merkmal des Nutzers an den Zentralserver über die erste Kommunikationsverbindung zu übertragen.

Das Kommunikationsgerät 200 kann ein mobiles Kommunikationsgerät, beispielsweise ein Mobiltelefon oder Smartphone, sein. Das Kommunikationsgerät 200 kann ferner ein stationäres Kommunikationsgerät, beispielsweise ein Computer oder ein Terminal, sein.

Die Erfassungseinrichtung 201 kann eine Kamera zum Erfassen eines Gesichtsbildes des Nutzers oder zum Erfassen eines Irisabbildes eines Auges des Nutzers sein. Die Erfassungseinrichtung 201 kann ferner ein Mikrophon zum Erfassen eines Stimmmusters des Nutzers sein. Die Erfassungseinrichtung 201 kann ferner ein Fingerabdrucksensor zum Erfassen eines Fingerabdrucks des Nutzers sein. Die Erfassungseinrichtung 201 kann ferner ein Irisscanner zum Erfassen eines Irisabbildes eines Auges des Nutzers sein.

Die Kommunikationsschnittstelle 203 kann eine drahtlose Kommunikationsschnittstelle, beispielsweise eine Mobilfunkkommunikationsschnittstelle, oder eine drahtgebundene Kommunikationsschnittstelle sein.

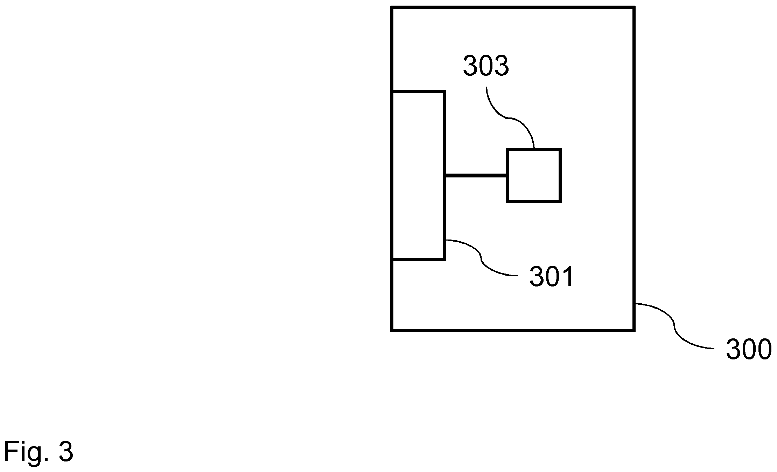

Fig. 3 zeigt ein Diagramm eines elektronischen Identifikationsdienstes 300 zum Identifizieren eines Nutzers eines Kommunikationsgerätes gemäß einer Ausführungsform.

Der elektronische Identifikationsdienst 300 umfasst eine Kommunikationsschnittstelle 301, welche ausgebildet ist, den elektronischen Identifikationsdienst gegenüber einem Zentralserver zu authentifizieren, um eine zweite Kommunikationsverbindung zwischen dem elektronischen Identifikationsdienst und dem Zentralserver aufzubauen, und ein erfasstes biometrisches Merkmal des Nutzers von dem Zentralserver über die zweite Kommunikationsverbindung zu empfangen, und einen Prozessor 303, welcher ausgebildet ist, das erfasste biometrische Merkmal des Nutzers mit einem biometrischen Referenzmerkmal zu vergleichen, um den Nutzer zu identifizieren.

Der elektronische Identifikationsdienst 300 kann das Vergleichen des erfassten biometrischen Merkmals des Nutzers mit dem biometrischen Referenzmerkmal automatisiert durchführen. Der elektronische Identifikationsdienst 300 kann das Vergleichen des erfassten biometrischen Merkmals des Nutzers mit dem biometrischen Referenzmerkmal ferner unter Verwendung einer elektronischen Mustererkennung und/oder eines elektronischen Mustervergleichs durchführen. Gemäß einer Ausführungsform wird der Vergleich des erfassten biometrischen Merkmals des Nutzers mit dem biometrischen Referenzmerkmal visuell durch eine Person durchgeführt.

Die Kommunikationsschnittstelle 301 kann eine drahtlose Kommunikationsschnittstelle, beispielsweise eine Mobilfunkkommunikationsschnittstelle, oder eine drahtgebundene Kommunikationsschnittstelle sein.

Der Prozessor 303 kann ausgebildet sein, ein Computerprogramm auszuführen.

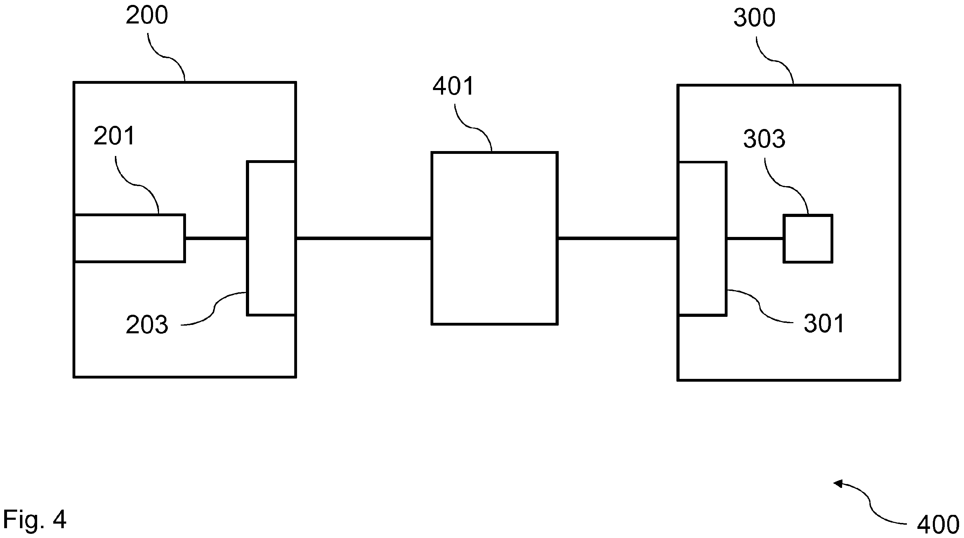

Fig. 4 zeigt ein Diagramm eines Systems 400 zum Identifizieren eines Nutzers eines Kommunikationsgerätes 200 unter Verwendung eines elektronischen Identifikationsdienstes 300 gemäß einer Ausführungsform. Das System 400 umfasst das Kommunikationsgerät 200, den elektronischen Identifikationsdienst 300, und einen Zentralserver 401.

Das Kommunikationsgerät 200 umfasst eine Erfassungseinrichtung 201, welche ausgebildet ist, ein biometrisches Merkmal des Nutzers zu erfassen, und eine Kommunikationsschnittstelle 203, welche ausgebildet ist, das Kommunikationsgerät 200 gegenüber dem Zentralserver 401 zu authentifizieren, um eine erste Kommunikationsverbindung zwischen dem Kommunikationsgerät 200 und dem Zentralserver 401 aufzubauen, und das erfasste biometrische Merkmal des Nutzers an den Zentralserver 401 über die erste Kommunikationsverbindung zu übertragen.

Der elektronische Identifikationsdienst 300 umfasst eine Kommunikationsschnittstelle 301, welche ausgebildet ist, den elektronischen Identifikationsdienst 300 gegenüber dem Zentralserver 401 zu authentifizieren, um eine zweite Kommunikationsverbindung zwischen dem elektronischen Identifikationsdienst 300 und dem Zentralserver 401 aufzubauen, und das erfasste biometrische Merkmal des Nutzers von dem Zentralserver 401 über die zweite Kommunikationsverbindung zu empfangen, und einen Prozessor 303, welcher ausgebildet ist, das erfasste biometrische Merkmal des Nutzers mit einem biometrischen Referenzmerkmal zu vergleichen, um den Nutzer zu identifizieren.

Der Zentralserver 401 ist ausgebildet, das erfasste biometrische Merkmal des Nutzers an den elektronischen Identifikationsdienst 300 über die zweite Kommunikationsverbindung zu übertragen. Der Zentralserver 401 kann das erfasste biometrische Merkmal des Nutzers von dem Kommunikationsgerät 200 an den elektronischen Identifikationsdienst 300 weiterleiten. Der Zentralserver 401 kann ein Instant-Messaging-Zentralserver sein, welcher beispielsweise gemäß einem erweiterbaren Nachrichten- und Anwesenheitsprotokoll (Extensible Messaging and Presence Protocol, XMPP) implementiert sein kann.

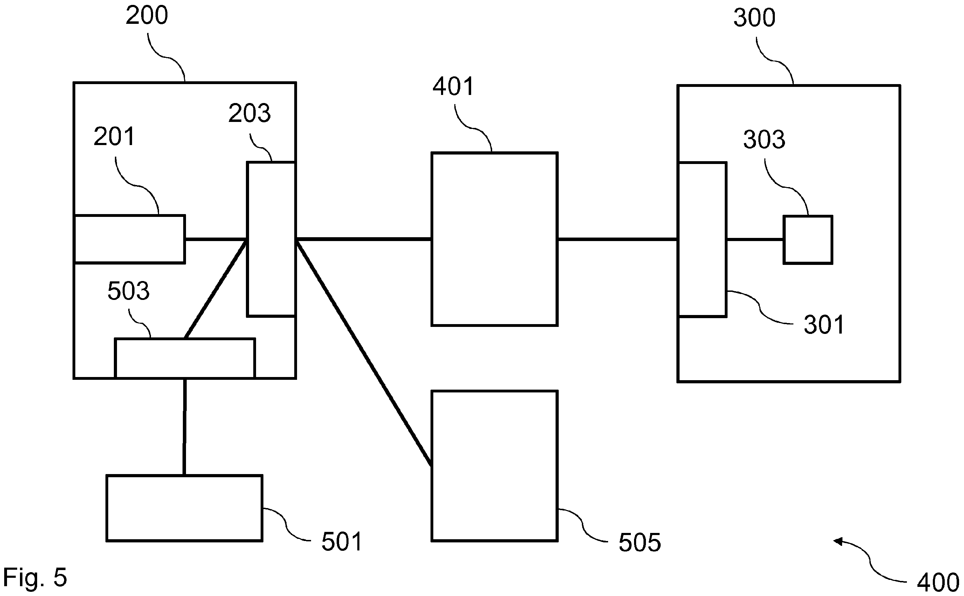

Fig. 5 zeigt ein Diagramm eines Systems 400 zum Identifizieren eines Nutzers eines Kommunikationsgerätes 200 unter Verwendung eines elektronischen Identifikationsdienstes 300 gemäß einer Ausführungsform. Das System 400 umfasst das Kommunikationsgerät 200, den elektronischen Identifikationsdienst 300, und einen Zentralserver 401.

Das System 400 umfasst ferner ein elektronisch auslesbares Identifikationsdokument 501 des Nutzers. Das elektronisch auslesbare Identifikationsdokument 501 kann eines der folgenden Identifikationsdokumente sein: Identitätsdokument, wie Personalausweis, Reisepass, Zugangskontrollausweis, Berechtigungsausweis, Unternehmensausweis, Steuerzeichen oder Ticket, Geburtsurkunde, Führerschein oder Kraftfahrzeugausweis, Zahlungsmittel, beispielsweise eine Bankkarte oder Kreditkarte. Das elektronisch auslesbare Identifikationsdokument 501 kann ferner einen elektronisch auslesbaren integrierten Schaltkreis, beispielsweise einen NFC-Chip oder einen RFID-Chip, umfassen. Das elektronisch auslesbare Identifikationsdokument 501 kann ein- oder mehrlagig bzw. papier- und/oder kunststoffbasiert sein. Das elektronisch auslesbare Identifikationsdokument 501 kann aus kunststoffbasierten Folien aufgebaut sein, welche zu einem Kartenkörper mittels Verkleben und/oder Laminieren zusammengefügt werden, wobei die Folien bevorzugt ähnliche stoffliche Eigenschaften aufweisen.

Das System 400 umfasst ferner optional einen elektronischen Identifizierungsserver 505. Der elektronische Identifizierungsserver 505 kann ein eID-Server sein. Der elektronische Identifizierungsserver 505 kann gemäß der technischen Richtlinie BSI TR-03130 implementiert werden.

Das Kommunikationsgerät 200 umfasst eine Erfassungseinrichtung 201, welche ausgebildet ist, ein biometrisches Merkmal des Nutzers zu erfassen, und eine Kommunikationsschnittstelle 203, welche ausgebildet ist, das Kommunikationsgerät 200 gegenüber dem Zentralserver 401 zu authentifizieren, um eine erste Kommunikationsverbindung zwischen dem Kommunikationsgerät 200 und dem Zentralserver 401 aufzubauen, und das erfasste biometrische Merkmal des Nutzers an den Zentralserver 401 über die erste Kommunikationsverbindung zu übertragen.

Das Kommunikationsgerät 200 umfasst ferner eine weitere Kommunikationsschnittstelle 503, beispielsweise eine Nahfeldkommunikationsschnittstelle, welche ausgebildet ist, mit dem elektronisch auslesbaren Identifikationsdokument 501 des Nutzers zu kommunizieren, um ein biometrisches Referenzmerkmal aus dem elektronisch auslesbaren Identifikationsdokument 501 des Nutzers auszulesen. Die weitere Kommunikationsschnittstelle 503 kann gemäß einem Near Field Communication (NFC) Standard oder Radio Frequency Identification (RFID) Standard implementiert sein. Die weitere Kommunikationsschnittstelle 503 kann ausgebildet sein, eine Authentizität oder Echtheit eines elektronischen Schaltkreises des Identifikationsdokumentes 501 zu verifizieren.

Der elektronische Identifikationsdienst 300 umfasst eine Kommunikationsschnittstelle 301, welche ausgebildet ist, den elektronischen Identifikationsdienst 300 gegenüber dem Zentralserver 401 zu authentifizieren, um eine zweite Kommunikationsverbindung zwischen dem elektronischen Identifikationsdienst 300 und dem Zentralserver 401 aufzubauen, und das erfasste biometrische Merkmal des Nutzers von dem Zentralserver 401 über die zweite Kommunikationsverbindung zu empfangen, und einen Prozessor 303, welcher ausgebildet ist, das erfasste biometrische Merkmal des Nutzers mit einem biometrischen Referenzmerkmal zu vergleichen, um den Nutzer zu identifizieren.

Der Zentralserver 401 ist ausgebildet, das erfasste biometrische Merkmal des Nutzers an den elektronischen Identifikationsdienst 300 über die zweite Kommunikationsverbindung zu übertragen. Der Zentralserver 401 kann das erfasste biometrische Merkmal des Nutzers von dem Kommunikationsgerät 200 an den elektronischen Identifikationsdienst 300 weiterleiten. Der Zentralserver 401 kann ein Instant-Messaging-Zentralserver sein, welcher beispielsweise gemäß einem erweiterbaren Nachrichten- und Anwesenheitsprotokoll (Extensible Messaging and Presence Protocol, XMPP) implementiert sein kann.

Das biometrische Referenzmerkmal wird aus dem elektronisch auslesbaren Identifikationsdokument 501 des Nutzers mittels der weiteren Kommunikationsschnittstelle 503 durch das Kommunikationsgerät 200 ausgelesen. Das ausgelesene biometrische Referenzmerkmal wird anschließend an den elektronischen Identifikationsdienst 300 über die erste Kommunikationsverbindung und die zweite Kommunikationsverbindung durch das Kommunikationsgerät 200 übertragen.

Das Auslesen des biometrischen Referenzmerkmals aus dem elektronisch auslesbaren Identifikationsdokument 501 des Nutzers kann folgendermaßen durchgeführt werden. Das Kommunikationsgerät 200 kann eine optisch erfassbare Identifikationskennung des Identifikationsdokumentes 501 optisch erfassen. Hierfür kann die Erfassungseinrichtung 201 des Kommunikationsgerätes 200 beispielsweise eine Kamera zum optischen Erfassen der optisch erfassbaren Identifikationskennung des Identifikationsdokumentes 501 umfassen. Das Auslesen des biometrischen Referenzmerkmals aus dem elektronisch auslesbaren Identifikationsdokument 501 des Nutzers kann mittels der weiteren Kommunikationsschnittstelle 503 durch das Kommunikationsgerät 200 auf Basis der optisch erfassten Identifikationskennung des Identifikationsdokumentes 501 durchgeführt werden. Der elektronische Identifizierungsserver 505 wird hierbei nicht verwendet.

Das Auslesen des biometrischen Referenzmerkmals aus dem elektronisch auslesbaren Identifikationsdokument 501 des Nutzers kann ferner unter Verwendung des elektronischen Identifizierungsservers 505 folgendermaßen durchgeführt werden. Das Kommunikationsgerät 200 ist hierfür mit dem elektronischen Identifizierungsserver 505 verbunden. Das Kommunikationsgerät 200 sendet mittels der Kommunikationsschnittstelle 203 an den elektronischen Identifizierungsserver 505 eine Ausleseanfrage aus. Zwischen dem elektronischen Identifizierungsserver 505 und dem elektronisch auslesbaren Identifikationsdokument 501 wird anschließend über das Kommunikationsgerät 200 eine dritte Kommunikationsverbindung aufgebaut. Das biometrische Referenzmerkmal wird anschließend aus dem elektronisch auslesbaren Identifikationsdokument 501 des Nutzers durch den elektronischen Identifizierungsserver 505 ausgelesen. Das ausgelesene biometrische Referenzmerkmal wird anschließend durch den elektronischen Identifizierungsserver 505 an das Kommunikationsgerät 200 übertragen. Die Ausleseanfrage kann eine Kommunikationsadresse des Kommunikationsgerätes 200 umfassen. Die dritte Kommunikationsverbindung kann authentifiziert und/oder verschlüsselt sein.

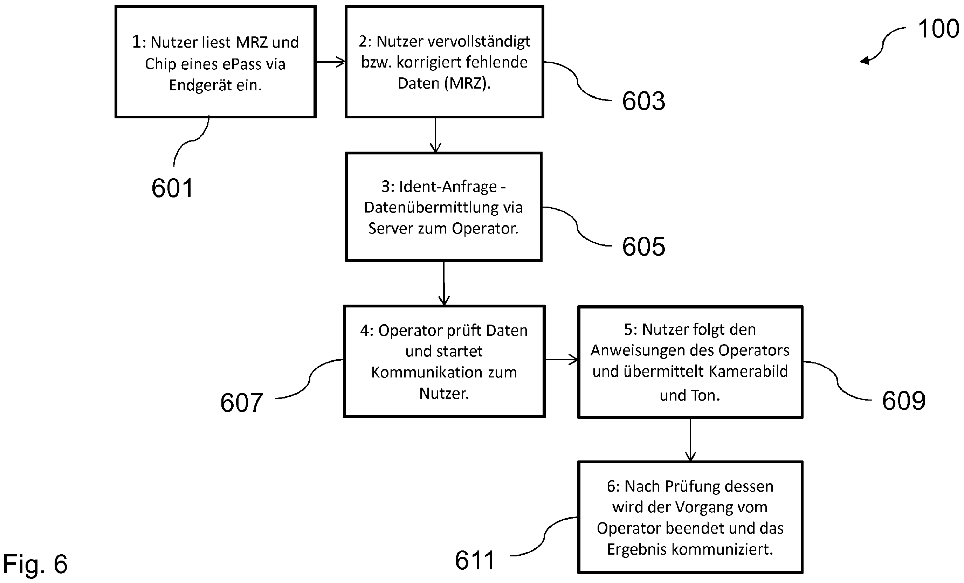

Fig. 6 zeigt ein Diagramm eines Verfahrens 100 zum Identifizieren eines Nutzers eines Kommunikationsgerätes unter Verwendung eines elektronischen Identifikationsdienstes gemäß einer Ausführungsform. Das Verfahren 100 umfasst die Schritte eines Einlesens 601, eines Vervollständigens 603, eines Übermittelns 605, eines Prüfens 607, eines Übermittelns 609, und eines Prüfens 611.

Die Erfindung ermöglicht ein Durchführen eines Fernidentifikationsverfahrens oder Remote-Ident-Verfahrens mittels eines Kommunikationsgerätes oder Smartphones eines Nutzers. Basierend auf einer Prüfung einer optisch erfassbaren Identifikationskennung eines Identifikationsdokumentes oder einer maschinen-lesbaren Zone (MRZ) kann eine Identifikationsanwendung oder Identifikationsapplikation eingesetzt werden.

Das Einlesen 601 umfasst ein Einlesen einer optisch erfassbaren Identifikationskennung eines Identifikationsdokumentes oder einer maschinen-lesbaren Zone (MRZ) und eines integrierten Schaltkreises oder Chips des Identifikationsdokumentes mittels eines Kommunikationsgerätes oder Endgerätes durch den Nutzer. Das Identifikationsdokument kann ein elektronischer Reisepass oder ePass sein. Nach einem Starten der Applikation kann dem Nutzer eine Übersicht über die einzugebenden Personendaten oder Daten angezeigt werden. Diese können als Platzhalter für bestimmte Informationen dienen. Die Übersicht kann grafisch angezeigt werden und kann jederzeit über ein Hilfe-Menü erreichbar sein.

Das Vervollständigen 603 umfasst ein Vervollständigen und/oder ein Korrigieren fehlender Personendaten oder Daten, beispielsweise der optisch erfassten Identifikationskennung oder maschinen-lesbaren Zone (MRZ), durch den Nutzer. Der Nutzer kann mithilfe einer Kamera, beispielsweise einer mobilen Kamera, und mittels OCR die optisch erfassbare Identifikationskennung oder maschinen-lesbare Zone (MRZ) des Identifikationsdokumentes oder ePasses erfassen. In einem weiteren Schritt kann eine Prüfapplikation für die optisch erfassbare Identifikationskennung oder maschinen-lesbare Zone (MRZ) mittels eines implementierten Ablaufs oder Workflows abgearbeitet werden.

Das Übermitteln 605 umfasst ein Übermitteln einer Identifikations-Anfrage oder Ident-Anfrage sowie eine Datenübermittlung über den Zentralserver oder Server zum elektronischen Identifikationsdienst oder Operator. Der Nutzer kann weitere oder fehlende Personendaten oder Daten eingeben, beispielsweise eine Anschrift mit Straße, Postleitzahl (PLZ) und Ort. Es können dabei verschiedene Felder verwendet werden. Die Felder können vorausgefüllt sein oder nicht. Beispielsweise kann eine Dokumenten-ID vorausgefüllt sein, ein Name vorausgefüllt sein, ein Geburtsdatum vorausgefüllt sein, eine Nationalität vorausgefüllt sein, Straße und Hausnummer nicht vorausgefüllt sein, eine Postleitzahl (PLZ) nicht vorausgefüllt sein, ein Ort nicht vorausgefüllt sein, und eine Emailadresse nicht vorausgefüllt sein.

Gemäß einer Ausführungsform können vorausgefüllte Felder vom Nutzer nicht bearbeitet oder korrigiert werden. Bei unzureichenden Leseergebnissen, beispielsweise falls ein OCR-Schwellwert oder OCR-Threshold unterschritten wird, kann jedoch eine Korrektur erlaubt werden. Die Felder oder Daten können später über einen Chipdatenvergleich auf Echtheit geprüft werden. Somit kann ein Bearbeiten der erkannten optisch erfassbaren Identifikationskennung oder maschinen-lesbaren Zone (MRZ) ermöglicht oder erlaubt sein. Die Felder oder Daten, die vom integrierten Schaltkreis oder Chip gelesen werden, können nicht bearbeitbar sein.

Die Daten für den Zugriff auf dem integrierten Schaltkreis oder Chip können erfasst werden und ein Bild der optisch erfassbaren Identifikationskennung oder maschinen-lesbaren Zone (MRZ), d.h. ein Eingangsbild oder Inputbild für eine OCR, kann in einen Datencontainer eingefügt werden. Dabei können eine Seriennummer, ein Ablaufdatum und ein Geburtstag erfasst werden. Zudem können Plausibilitätsprüfungen durchgeführt werden. Dabei können Wertebereiche überprüft oder abgefangen werden, beispielsweise können keine Buchstaben an Stellen zugelassen werden, an denen nur Zahlen erwartet werden.

Das Prüfen 607 umfasst ein Prüfen von Daten durch den elektronischen Identifikationsdienst oder Operator und ein Starten einer Kommunikation zum Kommunikationsgerät oder Nutzer durch den elektronischen Identifikationsdienst oder Operator. Nach der Eingabe kann eine Verbindung zum einem Zentralserver oder Server aufgebaut werden. Bei erfolgreichem Aufbau der Verbindung kann ein Datencontainer, bestehend aus einem Chipdatensatz, beispielsweise einer Datengruppe DG1, einer Datengruppe DG2 mit Gesichtsbild, und einer Echtheitsprüfung auf Basis einer passiven Authentifikation (Passive Authentication, PA), und dem Datensatz aus dem Schritt des Vervollständigens 603 übermittelt werden. Der Chipdatensatz kann ein Abstract Syntax Notation One (ASN1) Datensatz oder ein lesbarer Datensatz mit Verifikationsstatus sein. Es kann dabei eine Zeichenkette oder ein String für die Datengruppe DG1 übertragen werden, welcher lesbar sein kann, und ein biometrisches Referenzmerkmal oder Chip-Bild in einem im integrierten Schaltkreis oder Chip enthaltenen Format, beispielsweise BMP oder JPEG2000. Zusätzlich können die eingegebenen Personendaten oder Daten, die nicht auf dem integrierten Schaltkreis oder Chip enthalten sind, beispielsweise eine Anschrift, sowie eine Zuordnung zu einem Kunden des elektronischen Identifikationsdienstes oder Operators übertragen werden. Der elektronische Identifikationsdienst oder Operator kann über den Eingang des Datencontainers oder Datensatzes informiert werden.

Das Übermitteln 609 umfasst ein Folgen der Anweisungen des elektronischen Identifikationsdienstes oder Operators durch das Kommunikationsgerät oder den Nutzer, und ein Übermitteln eines biometrischen Merkmals des Nutzers, beispielsweise eines Kamerabildes und eines Tons, durch das Kommunikationsgerät oder den Nutzer. Als erste Ausbaustufe kann auf einem Computer oder PC des elektronischen Identifikationsdienstes oder Operators ein Client ablaufen. Der elektronische Identifikationsdienst oder Operator kann eine Datei öffnen. Dann können beispielsweise mittels eines Browsers oder einer Bildverarbeitungssoftware die übermittelten Personendaten oder Daten, ein Lese- und/oder Prüfergebnis der optisch erfassbaren Identifikationskennung oder maschinen-lesbaren Zone (MRZ) des Identifikationsdokumentes, ein Prüfergebnis des integrierten Schaltkreises oder Chips, beispielsweise ein Hashwert oder eine Signatur auf Basis einer passiven Authentifikation (Passive Authentication, PA), und ein Vergleichsergebnis der Daten des integrierten Schaltreises oder Chips auf Basis der optisch erfassbaren Identifikationskennung oder maschinen-lesbaren Zone (MRZ) angezeigt werden. Die Verifikation kann auf dem Kommunikationsgerät oder Smartphone durchgeführt werden. Auf dem Client des elektronischen Identifikationsdienstes oder Operators kann lediglich eine Ansicht oder ein View angezeigt werden. Als zweite Ausbaustufe kann ein spezieller Client für den elektronischen Identifikationsdienst oder Operator implementiert werden.

Das Prüfen 611 umfasst ein Beenden des Vorgangs durch den elektronischen Identifikationsdienst oder Operator nach der Prüfung, und ein Kommunizieren des Ergebnisses. Nach einem erfolgreichen Lesen und/oder Prüfen des Identifikationsdokumentes, beispielsweise der optisch erfassbaren Identifikationskennung oder maschinen-lesbaren Zone (MRZ) und/oder des integrierten Schaltkreises oder Chips des Identifikationsdokumentes, kann das Kommunikationsgerät oder der Nutzer aufgefordert werden, ein Video als biometrisches Merkmal, beispielsweise von zehn Sekunden Dauer, mit einer Kamera, beispielsweise einer Frontkamera, zu erfassen oder aufzunehmen. Der Nutzer kann sich dabei selbst sehen. Darüber hinaus kann eine Folge oder Serie von Bildern oder Fotos als biometrisches Merkmal erfasst oder aufgenommen werden, welche an den elektronischen Identifikationsdienst oder Operator, je nach Netzverfügbarkeit, in Teilen oder vollständig übertragen werden kann.

Wenn ein Videomodus aktiviert ist, kann mittels einer Gesichtserkennung oder Face-Recognition ein Gesicht gesucht werden. Ist ein Gesicht gefunden, kann eine Aufnahmeschaltfläche oder ein Aufnahme-Button aktiviert werden und der Nutzer ein Video als biometrisches Merkmal von sich aufnehmen. Zwischendurch kann geprüft werden, ob das Gesicht noch sichtbar oder vorhanden ist. Gegebenenfalls kann ein Gesichtsfinder oder Face-Finder laufen und eine permanente Rückmeldung oder Feedback an den Nutzer, beispielsweise mittels eines grünen oder roten Gesichtsrahmens, geben. Wenn das Gesicht für längere Zeit nicht sichtbar ist oder verschwindet, kann die Erfassung oder Aufnahme wiederholt werden.

Eine eigenständige Erfassung oder Aufnahme durch den Nutzer kann einen asynchronen Identifikationsvorgang oder Ident-Prozess ermöglichen. Der elektronische Identifikationsdienst oder Operator kann mehrere Anfragen nacheinander abarbeiten. Die Identifikationsanfragen oder Ident-Anfragen können in einer einfachen Liste, beispielsweise sortiert nach Datum und Zeit, beim elektronischen Identifikationsdienst oder Operator auflaufen. Gemäß einer Ausführungsform kann auf einen Operator verzichtet werden. Dem Nutzer kann mitgeteilt werden, dass der elektronische Identifikationsdienst oder Operator eine Prüfung der ermittelten Daten vornimmt oder durchführt.

Wenn der elektronische Identifikationsdienst oder Operator die Informationen auf einem Bildschirm, beispielsweise einem Touchscreen, anzeigt oder erhalten hat, kann die Identität des Nutzers anhand des biometrischen Merkmals, beispielsweise des Gesichtsbildes oder Gesichtes, automatisch oder manuell geprüft werden. Dabei kann ein Video des Nutzers als biometrisches Merkmal verarbeitet oder angesehen und daneben, beispielsweise in gleicher Größe, das Gesichtsbild vom integrierten Schaltkreis oder Chip des Identifikationsdokumentes und/oder von der Datenseite als biometrisches Referenzmerkmal verglichen werden.

Da die Personendaten bereits verifiziert sein können, kann der elektronische Identifikationsdienst oder Operator die Identität des Nutzers bestätigen. Die passive Authentifikation (Passive Authentication, PA) kann erfolgreich gewesen sein, da es ansonsten gegebenenfalls kein Video geben kann. Der Vergleich kann auch mittels der Gesichtserkennung durchgeführt werden, wobei die passive Authentifikation (Passive Authentication, PA) valide Daten bereitstellen kann. Ein Personendatum, beispielsweise eine Personenadresse, kann eine unbestätigte Zusatzinformation sein.

Dem Nutzer kann eine Meldung angezeigt werden, dass der Vorgang abgeschlossen ist und ein Ergebnis, beispielsweise "erfolgreich" oder "nicht erfolgreich", kann dargestellt werden. Der Nutzer kann jederzeit via Berührung oder Touch auf die Schaltfläche "Neu" oder "Home" zurück zur Ausgangssituation geführt werden, einen neuen Vorgang starten oder die Applikation beenden.

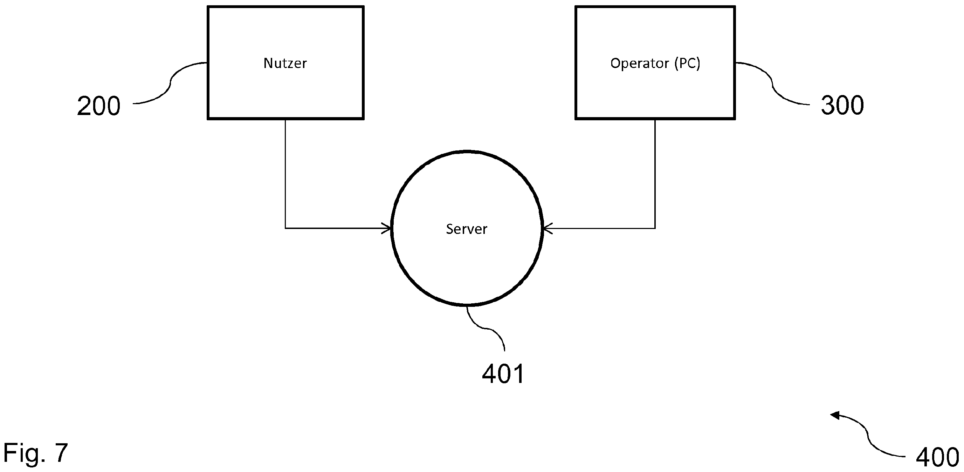

Fig. 7 zeigt ein Diagramm eines Systems 400 zum Identifizieren eines Nutzers eines Kommunikationsgerätes 200 unter Verwendung eines elektronischen Identifikationsdienstes 300 gemäß einer Ausführungsform. Das System 400 umfasst das Kommunikationsgerät 200, den elektronischen Identifikationsdienst 300, und einen Zentralserver 401. Dem Kommunikationsgerät 200 ist ein Nutzer zugeordnet. Dem elektronischen Identifikationsdienst 300 ist ein Operator oder PC zugeordnet. Der Zentralserver 401 wird durch einen Server gebildet.

Der Zentralserver 401 oder Server kann auf Basis eines offenen Protokolls implementiert werden. Mögliche Protokolle sind beispielsweise XMPP (Extensible Messaging and Presence Protocol) oder Jabber, d.h. Instant-Messaging Protokolle, oder SIP (Session Initiation Protocol) in Form von VOIP (Voice over IP), RTP (Real-Time Transport Protocol), SRTP (Secure Real-Time Transport Protocol), oder WEBRTP (WEB Real-Time Transport Protocol).

Beispielsweise kann ein XMPP Server oder eine vergleichbare technische Lösung gewählt werden, welche neben einem Protokoll zur Übertragung von Daten auch eine Möglichkeit einer TLS-basierten Kommunikation bereitstellt. Die Kommunikation zwischen dem Kommunikationsgerät 200 oder Nutzer und/oder dem elektronischen Identifikationsdienst 300 oder Operator kann über den Zentralserver 401 oder Server durchgeführt werden.

An dem Zentralserver 401 oder Server können sich mehrere elektronische Identifikationsdienste 300 oder Operators sowie mehrere Kommunikationsgeräte 200 oder Nutzer authentifizieren oder anmelden. Gemäß einer Ausführungsform sind lediglich ein elektronischer Identifikationsdienst 300 oder Operator sowie ein Kommunikationsgerät 200 oder Nutzer gleichzeitig vorgesehen. Der elektronische Identifikationsdienst 300 oder Operator kann einen Client direkt auf dem Zentralserver 401 oder Server starten, beispielsweise auf einem Notebook, oder auf einem separaten Endgerät.

Bei der Verwendung von offenen Protokollen kann ein normaler Authentifizierungs- oder Login-Vorgang mittels Login-Daten, beispielsweise einer Registrierung des Nutzers vor der Kommunikation mit anderen Teilnehmern, durchgeführt werden. Gemäß einer Ausführungsform wird eine Registrierung vorab auf dem Kommunikationsgerät 200, beispielsweise einem Smartphone, oder dem Zentralserver 401 oder System, durchgeführt oder erstellt, sodass ein Nutzer vordefinierte Authentifizierungs- oder Login-Daten zur Authentifizierung oder Anmeldung nutzen kann. Gemäß einer Ausführungsform wird somit eine Registrierung von Seiten des Kommunikationsgerätes 200 oder Nutzers nicht separat durchgeführt.

Innerhalb einer Anwendung oder App kann, beispielsweise in einem versteckten Menü, eine Zuordnung zu einem Nutzer vorgenommen werden. Dies kann optional sein. Vordefinierte Nutzerkennungen oder Userkennungen, beispielsweise OP1, OP2, USER1, USER2, oder USER3, können dabei eingesetzt werden. Bei der Benutzerschnittstelle oder dem User Interface (UI) kann eine Actionbar eingesetzt werden. Alle Anzeigen oder Screens können mit einer einheitlichen Bedienung versehen werden. Der aktuelle Schritt oder der aktuelle Bereich kann in einer Titelzeile der Anwendung oder App dargestellt werden. Der Nutzer kann jeweils einen Schritt zurück navigieren.

Um eine Identifikationsprüfung interaktiv durchzuführen, können eine Datenübertragung, eine Übertragung eines Livebildes, und/oder eine Übertragung von Textnachrichten eingesetzt werden. Das Verfahren kann eine Übertragung von biometrischen Merkmalen oder Identifikationsartefakten zur Identifikation und/oder zur Abwicklung von Dienstleistungen oder Geschäften ermöglichen. Hierzu kann beispielsweise das XMPP Protokoll eingesetzt werden.

Die Identifikationsartefakte als biometrische Merkmale oder biometrische Referenzmerkmale sind beispielsweise ein Livebild, Datensätze, wie beispielsweise der Inhalt eines elektronischen Identifikations- oder Ausweisdokumentes, Erfassungsdaten als Grundlage der Identifikation, und/oder Textnachrichten. Dadurch wird ein ortsunabhängiges Identifikationsverfahren ermöglicht, um Dienstleistungen oder Geschäfte, wie beispielsweise Mobilfunkverträge oder Bankdienstleistungen, zu beantragen oder abzuwickeln. Zur Identifikation kann ein Instant-Messaging Protokoll oder ein Chatprotokoll genutzt werden. Die Nutzung eines Instant-Messaging Protokolls oder eines Chatprotokolls kann eine authentifizierte Identifikation ermöglichen.

Gemäß einer Ausführungsform können manuellen Eingaben des Nutzers durch elektronisch ausgelesene Personendaten ersetzt werden, wie beispielsweise eine Adresse bei Verwendung eines neuen Personalausweises (nPA), wenn ein entsprechendes Identifikationsdokument oder Dokument vorliegt.

Gemäß einer Ausführungsform können fehlende Personendaten oder Daten aus einem gepflegten Profil des Nutzers des Kommunikationsgerätes oder Mobiltelefons ausgelesen werden, um eine Eingabe von Personendaten oder Daten zu umgehen oder zu minimieren.

Gemäß einer Ausführungsform kann das Verfahren mit einer zeitlichen Verzögerung durchgeführt werden, sodass, wenn der elektronische Identifikationsdienst oder Operator nicht erreichbar ist, dieser im Nachgang das Kommunikationsgerät des Nutzers oder den Client, beispielsweise mobil, kontaktieren kann.

### BEZUGSZEICHENLISTE

- 100: Verfahren zum Identifizieren eines Nutzers eines Kommunikationsgerätes
- 101: Authentifizieren des Kommunikationsgerätes
- 103: Authentifizieren des elektronischen Identifikationsdienstes
- 105: Erfassen eines biometrischen Merkmals des Nutzers
- 107: Übertragen des erfassten biometrischen Merkmals des Nutzers
- 109: Übertragen des erfassten biometrischen Merkmals des Nutzers
- 111: Vergleichen des erfassten biometrischen Merkmals des Nutzers

- 200: Kommunikationsgerät
- 201: Erfassungseinrichtung
- 203: Kommunikationsschnittstelle

- 300: Elektronischer Identifikationsdienst
- 301: Kommunikationsschnittstelle
- 303: Prozessor

- 400: System zum Identifizieren eines Nutzers eines Kommunikationsgerätes
- 401: Zentralserver

- 501: Identifikationsdokument
- 503: Weitere Kommunikationsschnittstelle
- 505: Elektronischer Identifizierungsserver

- 601: Einlesen
- 603: Vervollständigen
- 605: Übermitteln
- 607: Prüfen
- 609: Übermitteln
- 611: Prüfen

## Patentansprüche

1. Verfahren (100) zum Identifizieren eines Nutzers eines Kommunikationsgerätes (200) unter Verwendung eines elektronischen Identifikationsdienstes (300), mit:
Authentifizieren (101) des Kommunikationsgerätes (200) gegenüber einem Zentralserver (401), um eine erste Kommunikationsverbindung zwischen dem Kommunikationsgerät (200) und dem Zentralserver (401) aufzubauen;
Authentifizieren (103) des elektronischen Identifikationsdienstes (300) gegenüber dem Zentralserver (401), um eine zweite Kommunikationsverbindung zwischen dem elektronischen Identifikationsdienst (300) und dem Zentralserver (401) aufzubauen;
Erfassen (105) eines biometrischen Merkmals des Nutzers durch das Kommunikationsgerät (200);
Übertragen (107) des erfassten biometrischen Merkmals des Nutzers durch das Kommunikationsgerät (200) an den Zentralserver (401) über die erste Kommunikationsverbindung;
Übertragen (109) des erfassten biometrischen Merkmals des Nutzers durch den Zentralserver (401) an den elektronischen Identifikationsdienst (300) über die zweite Kommunikationsverbindung;
Auslesen eines biometrischen Referenzmerkmals aus einem elektronisch auslesbaren Identifikationsdokument (501) des Nutzers;
Übertragen des ausgelesenen biometrischen Referenzmerkmals an den elektronischen Identifikationsdienst (300) über die erste Kommunikationsverbindung und die zweite Kommunikationsverbindung; und
Vergleichen (111) des erfassten biometrischen Merkmals des Nutzers mit dem biometrischen Referenzmerkmal durch den elektronischen Identifikationsdienst (300), um den Nutzer zu identifizieren.

2. Verfahren (100) nach Anspruch 1, wobei dem Kommunikationsgerät (200) oder dem Nutzer des Kommunikationsgerätes (200) eine Zugangskennung oder ein Zugangspasswort zugeordnet ist, und wobei das Authentifizieren (101) des Kommunikationsgerätes (200) gegenüber dem Zentralserver (401) auf Basis der Zugangskennung oder des Zugangspassworts durchgeführt wird.

3. Verfahren (100) nach einem der vorstehenden Ansprüche, wobei dem elektronischen Identifikationsdienst (300) eine weitere Zugangskennung oder ein weiteres Zugangspasswort zugeordnet ist, und wobei das Authentifizieren (103) des elektronischen Identifikationsdienstes (300) gegenüber dem Zentralserver (401) auf Basis der weiteren Zugangskennung oder des weiteren Zugangspassworts durchgeführt wird.

4. Verfahren (100) nach einem der vorstehenden Ansprüche, wobei die erste Kommunikationsverbindung oder die zweite Kommunikationsverbindung mittels eines verschlüsselten Transportschichtsicherheitsprotokolls aufgebaut wird.

5. Verfahren (100) nach einem der vorstehenden Ansprüche, wobei das Erfassen (105) des biometrischen Merkmals des Nutzers durch das Kommunikationsgerät (200) ein Erfassen eines alphanummerischen Personendatums des Nutzers durch das Kommunikationsgerät (200) umfasst, wobei das Übertragen (107) des erfassten biometrischen Merkmals des Nutzers durch das Kommunikationsgerät (200) an den Zentralserver (401) über die erste Kommunikationsverbindung ein Übertragen des erfassten alphanummerischen Personendatums des Nutzers durch das Kommunikationsgerät (200) an den Zentralserver (401) über die erste Kommunikationsverbindung umfasst, und wobei das Übertragen (109) des erfassten biometrischen Merkmals des Nutzers durch den Zentralserver (401) an den elektronischen Identifikationsdienst (300) über die zweite Kommunikationsverbindung ein Übertragen des erfassten alphanummerischen Personendatums des Nutzers durch den Zentralserver (401) an den elektronischen Identifikationsdienst (300) über die zweite Kommunikationsverbindung umfasst.

6. Verfahren (100) nach einem der vorstehenden Ansprüche, wobei das Auslesen des biometrischen Referenzmerkmals aus dem elektronisch auslesbaren Identifikationsdokument (501) des Nutzers ein Auslesen eines weiteren alphanummerischen Personendatums aus dem elektronisch auslesbaren Identifikationsdokument (501) des Nutzers umfasst, und wobei das Übertragen des ausgelesenen biometrischen Referenzmerkmals an den elektronischen Identifikationsdienst (300) über die erste Kommunikationsverbindung und die zweite Kommunikationsverbindung ein Übertragen des ausgelesenen weiteren alphanummerischen Personendatums an den elektronischen Identifikationsdienst (300) über die erste Kommunikationsverbindung und die zweite Kommunikationsverbindung umfasst.

7. Verfahren (100) nach einem der vorstehenden Ansprüche, wobei das Auslesen des biometrischen Referenzmerkmals aus dem elektronisch auslesbaren Identifikationsdokument (501) des Nutzers ein optisches Erfassen einer optisch erfassbaren Identifikationskennung des Identifikationsdokumentes (501) durch das Kommunikationsgerät (200) umfasst, und wobei das Auslesen des biometrischen Referenzmerkmals aus dem elektronisch auslesbaren Identifikationsdokument (501) des Nutzers durch das Kommunikationsgerät (200) auf Basis der optisch erfassten Identifikationskennung des Identifikationsdokumentes (501) durchgeführt wird.

8. Verfahren (100) nach einem der vorstehenden Ansprüche, wobei das Kommunikationsgerät (200) mit einem elektronischen Identifizierungsserver (505) verbunden ist, wobei das Verfahren (100) ferner ein Aussenden einer Ausleseanfrage durch das Kommunikationsgerät (200) an den elektronischen Identifizierungsserver (505) und ein Aufbauen einer dritten Kommunikationsverbindung zwischen dem elektronischen Identifizierungsserver (505) und dem elektronisch auslesbaren Identifikationsdokument (501) über das Kommunikationsgerät (200) umfasst, wobei das Auslesen des biometrischen Referenzmerkmals aus dem elektronisch auslesbaren Identifikationsdokument (501) des Nutzers durch den elektronischen Identifizierungsserver (505) durchgeführt wird, und wobei das Verfahren (100) ferner ein Übertragen des ausgelesenen biometrischen Referenzmerkmals durch den elektronischen Identifizierungsserver (505) an das Kommunikationsgerät (200) umfasst.

9. Verfahren (100) nach einem der vorstehenden Ansprüche, wobei das biometrische Merkmal des Nutzers ein Gesichtsbild des Nutzers, ein Stimmmuster des Nutzers, ein Fingerabdruck des Nutzers, oder ein Irisabbild eines Auges des Nutzers ist.

10. System (400) zum Identifizieren eines Nutzers eines Kommunikationsgerätes (200) unter Verwendung eines elektronischen Identifikationsdienstes (300), mit:
einem Kommunikationsgerät (200) zum Identifizieren eines Nutzers des Kommunikationsgerätes (200) unter Verwendung eines elektronischen Identifikationsdienstes (300), mit: einer Erfassungseinrichtung (201), welche ausgebildet ist, ein biometrisches Merkmal des Nutzers zu erfassen; und einer Kommunikationsschnittstelle (203), welche ausgebildet ist, das Kommunikationsgerät (200) gegenüber einem Zentralserver (401) zu authentifizieren, um eine erste Kommunikationsverbindung zwischen dem Kommunikationsgerät (200) und dem Zentralserver (401) aufzubauen, und das erfasste biometrische Merkmal des Nutzers an den Zentralserver (401) über die erste Kommunikationsverbindung zu übertragen; und einer weiteren Kommunikationsschnittstelle (503), insbesondere einer Nahfeldkommunikationsschnittstelle, welche ausgebildet ist, mit einem elektronisch auslesbaren Identifikationsdokument (501) des Nutzers zu kommunizieren, um ein biometrisches Referenzmerkmal aus dem elektronisch auslesbaren Identifikationsdokument (501) des Nutzers auszulesen; und
einem elektronischen Identifikationsdienst (300) zum Identifizieren eines Nutzers eines Kommunikationsgerätes (200), wobei der elektronische Identifikationsdienst (300) eine Kommunikationsschnittstelle (301), welche ausgebildet ist, den elektronischen Identifikationsdienst (300) gegenüber einem Zentralserver (401) zu authentifizieren, um eine zweite Kommunikationsverbindung zwischen dem elektronischen Identifikationsdienst (300) und dem Zentralserver (401) aufzubauen, und ein erfasstes biometrisches Merkmal des Nutzers von dem Zentralserver (401) über die zweite Kommunikationsverbindung zu empfangen; und einen Prozessor (303) umfasst, welcher ausgebildet ist, das erfasste biometrische Merkmal des Nutzers mit einem biometrischen Referenzmerkmal zu vergleichen, um den Nutzer zu identifizieren; und wobei das System (400) ferner
einen Zentralserver (401) umfasst, welcher ausgebildet ist, das erfasste biometrische Merkmal des Nutzers an den elektronischen Identifikationsdienst (300) über die zweite Kommunikationsverbindung zu übertragen.

11. Computerprogramm mit einem Programmcode zum Ausführen des Verfahrens (100) nach einem der Ansprüche 1 bis 9, wenn der Programmcode auf einem Computer ausgeführt wird.

## Claims

1. Method (100) for identifying a user of a communication device (200) by using an electronic identification service (300), which method comprises:
authentication (101) of the communication device (200) to a central server (401) in order to establish a first communication link between the communication device (200) and the central server (401);
authentication (103) of the electronic identification service (300) to the central server (401) in order to establish a second communication link between the electronic identification service (300) and the central server (401);
acquisition (105) of a biometric feature of the user by the communication device (200);
transmission (107) of the acquired biometric feature of the user by the communication device (200) to the central server (401) via the first communication link;
transmission (109) of the acquired biometric feature of the user by the central server (401) to the electronic identification service (300) via the second communication link;
reading of a biometric reference feature from an electronically readable identification document (501) of the user;
transmission of the read biometric reference feature to the electronic identification service (300) via the first communication link and the second communication link; and
comparison (111) of the acquired biometric feature of the user with the biometric reference feature by the electronic identification service (300) in order to identify the user.

2. Method (100) according to claim 1, wherein an access code or an access password is assigned to the communication device (200) or to the user of the communication device (200), and wherein the authentication (101) of the communication device (200) to the central server (401) is carried out on the basis of the access code or the access password.

3. Method (100) according to one of the preceding claims, wherein a further access code or a further access password is assigned to the electronic identification service (300), and wherein the authentication (103) of the electronic identification service (300) to the central server (401) is carried out on the basis of the further access code or the further access password.

4. Method (100) according to one of the preceding claims, wherein the first communication link or the second communication link is established by means of an encrypted transport layer security protocol.

5. Method (100) according to one of the preceding claims, wherein the acquisition (105) of the biometric feature of the user by the communication device (200) comprises an acquisition of an alphanumeric personal data item of the user by the communication device (200), wherein the transmission (107) of the acquired biometric feature of the user by the communication device (200) to the central server (401) via the first communication link comprises a transmission of the acquired alphanumeric personal data item of the user by the communication device (200) to the central server (401) via the first communication link, and wherein the transmission (109) of the acquired biometric feature of the user by the central server (401) to the electronic identification service (300) via the second communication link comprises a transmission of the acquired alphanumeric personal data item of the user by the central server (401) to the electronic identification service (300) via the second communication link.

6. Method (100) according to one of the preceding claims, wherein the reading of the biometric reference feature from the electronically readable identification document (501) of the user comprises a reading of a further alphanumeric personal data item from the electronically readable identification document (501) of the user, and wherein the transmission of the read biometric reference feature to the electronic identification service (300) via the first communication link and the second communication link comprises a transmission of the read further alphanumeric personal data item to the electronic identification service (300) via the first communication link and the second communication link.

7. Method (100) according to one of the preceding claims, wherein the reading of the biometric reference feature from the electronically readable identification document (501) of the user comprises an optical acquisition of an optically acquirable identification code of the identification document (501) by the communication device (200), and wherein the reading of the biometric reference feature from the electronically readable identification document (501) of the user by the communication device (200) is carried out on the basis of the optically acquired identification code of the identification document (501).

8. Method (100) according to one of the preceding claims, wherein the communication device (200) is connected to an electronic identification server (505), wherein the method (100) further comprises a sending of a read request by the communication device (200) to the electronic identification server (505) and an establishment of a third communication link between the electronic identification server (505) and the electronically readable identification document (501) via the communication device (200), wherein the reading of the biometric reference feature from the electronically readable identification document (501) of the user is carried out by the electronic identification server (505), and wherein the method (100) further comprises a transmission of the read biometric reference feature by the electronic identification server (505) to the communication device (200).

9. Method (100) according to one of the preceding claims, wherein the biometric feature of the user is a facial image of the user, a voiceprint of the user, a fingerprint of the user, or an iris image of an eye of the user.

10. System (400) for identifying a user of a communication device (200) by using an electronic identification service (300), which system comprises:
a communication device (200) for identifying a user of the communication device (200) by using an electronic identification service (300), which communication device comprises: an acquisition device (201) which is designed to acquire a biometric feature of the user; and a communication interface (203) which is designed to authenticate the communication device (200) to a central server (401) in order to establish a first communication link between the communication device (200) and the central server (401), and to transmit the acquired biometric feature of the user to the central server (401) via the first communication link; and a further communication interface (503), in particular a near-field communication interface, which is designed to communicate with an electronically readable identification document (501) of the user in order to read a biometric reference feature from the electronically readable identification document (501) of the user; and
an electronic identification service (300) for identifying a user of a communication device (200), wherein the electronic identification service (300) comprises a communication interface (301) which is designed to authenticate the electronic identification service (300) to a central server (401) in order to establish a second communication link between the electronic identification service (300) and the central server (401), and to receive an acquired biometric feature of the user from the central server (401) via the second communication link; and a processor (303) which is designed to compare the acquired biometric feature of the user with a biometric reference feature in order to identify the user; and wherein the system (400) further comprises
a central server (401) which is designed to transmit the acquired biometric feature of the user to the electronic identification service (300) via the second communication link.

11. Computer program comprising a program code for executing the method (100) according to one of claims 1 to 9 when the program code is run on a computer.

## Revendications

1. Procédé (100) d'identification d'un utilisateur d'un appareil de communication (200) recourant à un service d'identification électronique (300), comprenant :
l'authentification (101) de l'appareil de communication (200) par rapport à un serveur central (401), pour établir une première liaison de communication entre l'appareil de communication (200) et le serveur central (401) ;
l'authentification (103) du service d'identification électronique (300) par rapport au serveur central (401), pour établir une deuxième liaison de communication entre le service d'identification électronique (300) et le serveur central (401) ;
la détection (105) d'une caractéristique biométrique de l'utilisateur par l'appareil de communication (200) ;
la transmission (107) de la caractéristique biométrique de l'utilisateur détectée par l'appareil de communication (200) au serveur central (401) via la première liaison de communication ;
la transmission (109) de la caractéristique biométrique de l'utilisateur détectée par le serveur central (401) au service d'identification électronique (300) via la deuxième liaison de communication ;
la lecture d'une caractéristique biométrique de référence dans un document d'identification (501) de l'utilisateur lisible par moyens électroniques ;
la transmission de la caractéristique biométrique de référence lue au service d'identification électronique (300) via la première liaison de communication et la deuxième liaison de communication ; et
la comparaison (111) de la caractéristique biométrique de l'utilisateur détectée avec la caractéristique biométrique de référence par le service d'identification électronique (300), afin d'identifier l'utilisateur.

2. Procédé (100) selon la revendication 1, où un identificateur d'accès ou un mot de passe sont attribués à l'appareil de communication (200) ou à l'utilisateur de l'appareil de communication (200), et où l'authentification (101) de l'appareil de communication (200) par rapport au serveur central (401) est effectuée à partir de l'identificateur d'accès ou du mot de passe.

3. Procédé (100) selon l'une des revendications précédentes, où un autre identificateur d'accès ou un autre mot de passe sont attribués au service d'identification électronique (300), et où l'authentification (103) du service d'identification électronique (300) par rapport au serveur central (401) est effectuée à partir de l'autre identificateur d'accès ou de l'autre mot de passe.

4. Procédé (100) selon l'une des revendications précédentes, où la première liaison de communication ou la deuxième liaison de communication sont établies à l'aide d'un protocole de sécurité de couche de transport crypté.

5. Procédé (100) selon l'une des revendications précédentes, où la détection (105) de la caractéristique biométrique de l'utilisateur par l'appareil de communication (200) comprend la détection d'une donnée alphanumérique personnelle de l'utilisateur par l'appareil de communication (200), où la transmission (107) de la caractéristique biométrique de l'utilisateur détectée par l'appareil de communication (200) au serveur central (401) via la première liaison de communication comprend la transmission de la donnée alphanumérique personnelle de l'utilisateur détectée par l'appareil de communication (200) au serveur central (401) via la première liaison de communication, et où la transmission (109) de la caractéristique biométrique de l'utilisateur détectée par le serveur central (401) au service d'identification électronique (300) via la deuxième liaison de communication comprend la transmission de la donnée alphanumérique personnelle de l'utilisateur détectée par le serveur central (401) au service d'identification électronique (300) via la deuxième liaison de communication.

6. Procédé (100) selon l'une des revendications précédentes, où la lecture de la caractéristique biométrique de référence dans le document d'identification (501) de l'utilisateur lisible par moyens électroniques comprend la lecture d'une autre donnée alphanumérique personnelle dans le document d'identification (501) de l'utilisateur lisible par moyens électroniques, et où la transmission de la caractéristique biométrique de référence lue au service d'identification électronique (300) via la première liaison de communication et la deuxième liaison de communication comprend une transmission de l'autre donnée alphanumérique personnelle lue au service d'identification électronique (300) via la première liaison de communication et la deuxième liaison de communication.

7. Procédé (100) selon l'une des revendications précédentes, où la lecture de la caractéristique biométrique de référence dans le document d'identification (501) de l'utilisateur lisible par moyens électroniques comprend une détection optique par l'appareil de communication (200) d'un code d'identification détectable par moyens optiques du document d'identification (501), et où la lecture par l'appareil de communication (200) de la caractéristique biométrique de référence dans le document d'identification (501) de l'utilisateur lisible par moyens électroniques est effectuée à partir du code d'identification détectable par moyens optiques du document d'identification (501).

8. Procédé (100) selon l'une des revendications précédentes, où l'appareil de communication (200) est relié à un serveur d'identification électronique (505), ledit procédé (100) comprenant en outre l'émission d'une demande de lecture par l'appareil de communication (200) vers le serveur d'identification électronique (505) et l'établissement d'une troisième liaison de communication entre le serveur d'identification électronique (505) et le document d'identification (501) lisible par moyens électroniques via l'appareil de communication (200), la lecture de la caractéristique biométrique de référence dans le document d'identification (501) de l'utilisateur lisible par moyens électroniques étant effectuée par le serveur d'identification électronique (505), et ledit procédé (100) comprenant en outre la transmission à l'appareil de communication (200) de la caractéristique biométrique de référence lue par le serveur d'identification électronique (505).

9. Procédé (100) selon l'une des revendications précédentes, où la caractéristique biométrique de l'utilisateur est une image faciale de l'utilisateur, une empreinte vocale de l'utilisateur, une empreinte digitale de l'utilisateur ou l'image de l'iris d'un oeil de l'utilisateur.

10. Système (400) pour l'identification d'un utilisateur d'un appareil de communication (200) recourant à un service d'identification électronique (300), comprenant :
un appareil de communication (200) pour l'identification d'un utilisateur de l'appareil de communication (200) recourant à un service d'identification électronique (300), avec : un dispositif de détection (201), prévu pour détecter une caractéristique biométrique de l'utilisateur ; et une interface de communication (203) prévue pour authentifier l'appareil de communication (200) par rapport à un serveur central (401), afin d'établir une première liaison de communication entre l'appareil de communication (200) et le serveur central (401), et transmettre la caractéristique biométrique de l'utilisateur détectée au serveur central (401) via la première liaison de communication ; et une autre interface de communication (503), en particulier une interface de communication en champ proche, prévue pour communiquer avec un document d'identification (501) de l'utilisateur lisible par moyens électroniques, afin de lire une caractéristique biométrique de référence dans le document d'identification (501) de l'utilisateur lisible par moyens électroniques ; et
un service d'identification électronique (300) pour l'identification d'un utilisateur d'un appareil de communication (200), ledit service d'identification électronique (300) comprenant une interface de communication (301) prévue pour authentifier le service d'identification électronique (300) par rapport à un serveur central (401), afin d'établir une deuxième liaison de communication entre le service d'identification électronique (300) et le serveur central (401), et recevoir du serveur central (401) une caractéristique biométrique de l'utilisateur détectée via la deuxième liaison de communication ; et un processeur (303) prévu pour comparer la caractéristique biométrique de l'utilisateur détectée avec une caractéristique biométrique de référence, afin d'identifier l'utilisateur ; et où ledit système (400) comprend en outre
un serveur central (401) prévu pour transmettre la caractéristique biométrique de l'utilisateur au service d'identification électronique (300) via la deuxième liaison de communication.

11. Programme informatique avec un code-programme pour l'exécution du procédé (100) selon l'une des revendications 1 à 9, quand le code-programme est exécuté sur un ordinateur.
